Europäisches Patentamt

European Patent Office

Office européen des brevets

(11) Publication number: **0 343 312**
**A2**

## (12) EUROPEAN PATENT APPLICATION

(21) Application number: 88830318.7

(51) Int. Cl.⁴: **F16K 3/08 , F16K 27/04**

(22) Date of filing: **22.07.88**

(30) Priority: **26.05.88 IT 2075788**

(43) Date of publication of application:
**29.11.89 Bulletin 89/48**

(84) Designated Contracting States:
**BE CH DE ES FR GB GR LI NL**

(71) Applicant: **F.LLI SAGLIO TROMBONE S.r.l.**
**Via A. di Dio, 199**
**I-28027 Ornavasso (Novara)(IT)**

(72) Inventor: **Saglio Trombone, Mario**
**Via A.Di Dio, 199**
**I-28017 Ornavasso Novara(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **Ceramics disc shutter for faucets.**

(57) The present invention relates to a ceramics disc
shutter, of a preset loading type, for faucets in
general,which comprises a shutter body, adapted to
be fitted to a faucet and the like, and defining, in its
inside, a cavity for housing a fixed ceramics disc
and a movable ceramics disc.

The main features of the invention is that the
ceramics disc shutter further comprises an abutment
edge near the bottom end of the cavity.

With the top surface of this abutment edge, a
preloading gasket engages, which acts against the
fixed ceramics disc whereas, with the other surface
of the abutment ege, a tightness gasket engages
which acts on the seat defined on the faucet body.

Fig.1

## CERAMICS DISC SHUTTER FOR FAUCETS

The present invention relates to a ceramics disc shutter, of the preset loading type, for faucets in general.

As is known, ceramics disc shutters are presently available, which are used for fauctes and substantailly comprise a body, adapted to be threaded on a suitable seat of the faucet, which body is provided, in its inside, with a cavity adapted for housing a fixed ceramics disc, thereon a movable ceramics disc operates, said movable ceramics disc being coupled to a stem projecting from the shutter body and adapted to be driven by means of a knob or the like.

Also known is the fact that, in order to provide a good tightness, the two ceramics discs of the faucet must be clamped with a proper clamping force.

Moreover, tightness must be provided with respect to the coupling seat of the faucet.

In known embodiments, a single tightness gasket is provided, arranged at the bottom end of the shutter body.

This gasket is adapted to operate both against the ceramics discs and against the housing seat of the faucet body.

In such an arrangement, mainly in the case in which the seat of the faucet body is not perfectly made, an excessive load may be exerted between the ceramics discs, with a consequent difficult mutual rotation of said ceramics discs and, possible, an insufficient clamping force between the two ceramics discs, thereby a not proper tightness is obtained.

Another drawback affecting the prior art embodiments, is that shutter members must be provided both of the leftward opening and of the rightward opening type.

Accordingly, in order to provide for the possibility of obtaining a rightward or a leftward opening of the faucet, the shutter must be completely disassembled, which represents a further drawback.

Thus, the task of the present invention is to overcome the above mentioned drawbacks, by providing a ceramics disc shutter for faucets, of the preset loading type, which affords the possibility of obtaining a resilient loading between the two ceramics discs and which, moreover, is completely independent from the tightness action between the shutter and the seat of the faucet, thereby eliminating any possible excessive force biassing of the ceramics disc or tightness defects.

Within the scope of the above mentioned task, a main object of the present invention is to provide a ceramics disc shutter which affords the possibility of opening the faucet both rightward and leftward without the need of carrying out complex operations or completely disassembling the shutter body.

Another object of the present invention is to provide such a faucet shutter which is very reliable and safe in operation.

Yet another object of the present invention is to provide such a faucet shutter which can be made starting from easily available elements and materials and which, moreover, is advantageous from a mere economic standpoint.

According to one aspect of the present invention, the above mentioned task and objects, as well as yet other objects, which will become more apparent hereinafter, are achieved by a preset loading ceramics disc shutter, for faucets in general which comprises a shutter body, adapted to be engaged in a faucet and the like and defining, in its inside, a cavity for housing a fixed ceramics disc and a movable ceramics disc, characterized in that it further comprises an abutment edge at the bottom end of said cavity, with the top surface of said abutment edge a preloading gasket engaging, said preloading gasket acting against the fixed ceramics disc.

With the bottom surface or face of the abutment edge, a further gasket engages, which operates or acts on the seat defined by the faucet.

Further characteristics and advantages of the invention will become more apparent from the following detailed description of a preferred, though not exclusive, embodiment of a preset loading ceramics disc shutter, for faucets in general, which is illustrated in the accompanying drawings, in which:

Figure 1 is an exploded perspective view showing the shutter according to the present invention;

Figure 2 is another perspective view showing the shutter of the invention;

Figure 3 is an axial cross-sectional view showing the shutter according to the invention;

Figure 4 is a cross-sectional view of the shutter, taken substantially along the line V-V of Figure 3.

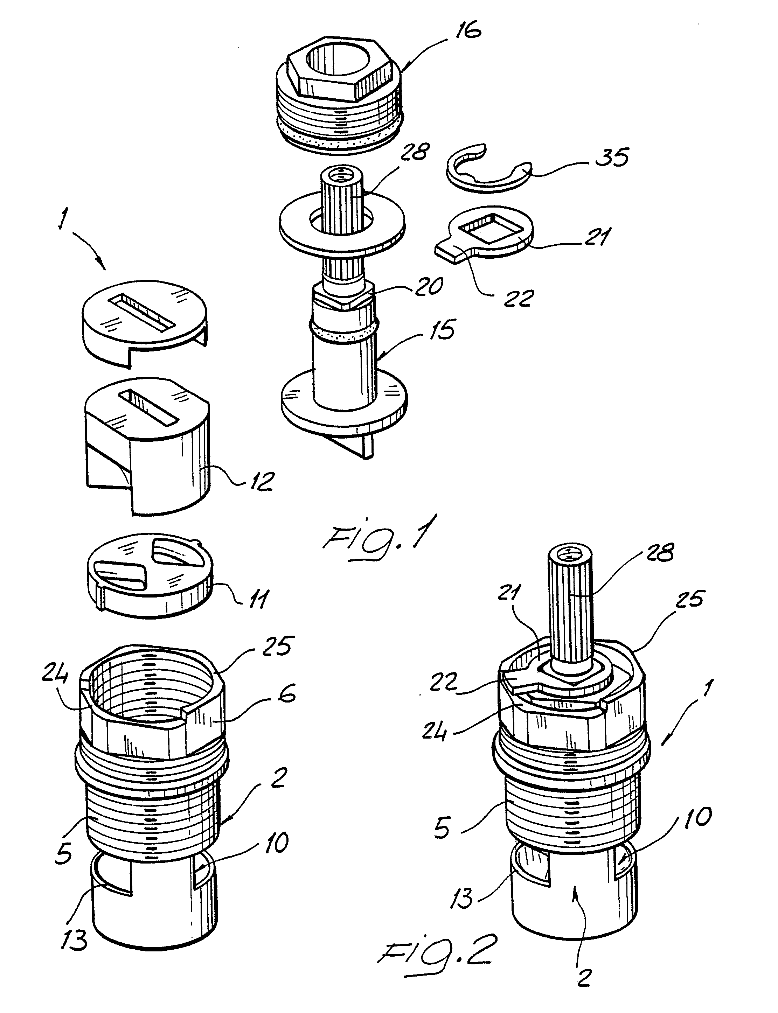

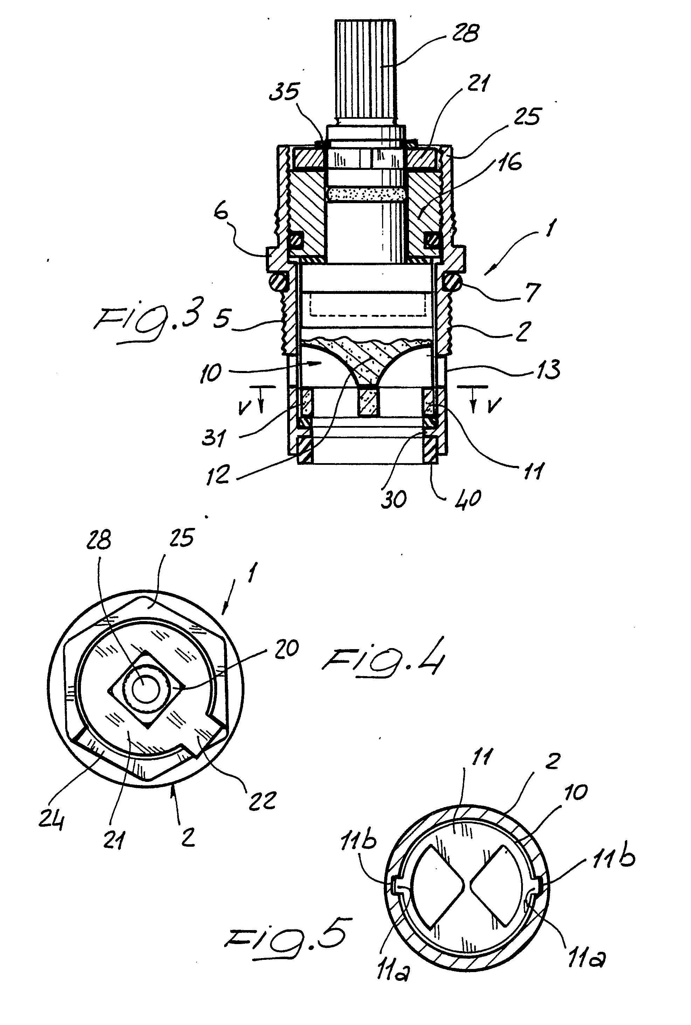

With reference to the Figures of the accompanying drawings, the preset loading ceramics disc shutter, for faucet in general, according to the invention, and which has been overally indicated at the reference number 1, comprises a shutter body 2, which can be introduced in a faucet, not shown in the drawings.

More specifically, the shutter body 2 has a substantially cylindrical shape and is provided, at an intermediate portion thereof, with an outer thread 5, thereabove a polygonal body 6 is provided for affixing it inside the body of a faucet.

Under the polygonal region 6, which practically acts as an abutment, a first 0-ring 7 is provided, for tightness purposes.

In its inside, the shutter body 2 defines a cavity, overally indicated at the reference number 10, in the inside of which a fixed ceramics disc 11 is housed, thereon acts, by contact, a movable ceramics disc 12 arranged at windows 13 defined through the body 2.

The ceramics discs 11 and 12, in a per se known manner, are provided with opened sectors or segments which, as they are registered with one an other, allow for water to pass through, whereas, when they are offset from one another, shut off the water passage.

Depending on the shape of the water windows, it will be possible to pass from an opening condition to a closing condition, by means of a rotation through 90 or 180°.

More specifically, the movable ceramics disc 12 is coupled to a stem 5 and is provided with a polygonal region or portion 20, therewith a washer 21 engages, provided with a radially extended lug 22, which can move in a cut-off 24 defined by the edge 25 arranged at the top end of the body 2.

The cut-off portion 24 practically provides the rotation region of the movable disc, and has an angular extension depending on the type of the used ceramics discs, that is of 90 or 180°, depending on the angle necessary for passing from a completely opened condition to a closing condition.

The stem 15 is further provided with an attaching end piece 28, thereto a conventional operating or driving knob or handle can be coupled.

A first main feature of the present invention is that the cavity 10, at its bottom end, is provided with an abutment edge 30, on the top face or surface thereof engages a preloading gasket 31, which acts on the bottom surface of the fixed ceramics disc 11.

The preloading is obtained by means of a resilient washer, or split resilient ring, preferably of the Seeger type 35, which axially clamps the stem 15 by acting above the washer 21.

Thus, a constant resilient loading between the two ceramics discs can be obtained, which resilient loading will be independent from the force clamping the shutter body in the seat of the faucet body.

In order to provide for the tightness between the shutter and faucet body, a tightness gasket 40 is further provided, which engages with the bottom surface of the abutment edge 30 and which can be clamped, in any suitable ways, against the mentioned seat, in order to provide the desired tightness, whithout affecting the clamping force between the two ceramics discs.

The fixed ceramics disc 11 is further provided with radially extending lugs, indicated at 11a, which engage with corresponding recesses 11b defined by the cavity 10 so as prevent the fixed ceramics disc from rotating.

In this connection it should be apparant that, by simply changing the location of the washer 21 with respect to the polygonal portion 20, it will be possible to transform the faucet from a rightward opening type to a lefward opening type, and viceversa, thereby affording the possibility of making a very flexible faucet adapted to be fitted to very different installations, and without the need of completely disassembling the shutter body, as is necessary in known prior art solutions.

From the above disclosure, it should be pointed out that the present invention fully achieves the intended task and objects.

In particular, the fact is to be stressed that a ceramics disc shutter has been provided which affords the possibility of always obtaining the proper resilient force between the two ceramics discs, independently from the conditions of the abutment seat defined on the body of the faucet.

Moreover, the shutter according to the invention can be fitted to faucets of the leftward and rightward opening type, since it will be sufficient to turn through 90° or 180°, depending on the used ceramics disc type, the washer 20.

Another main feature of the present invention is that a ceramics disc shutter has been provided which can easily be fitted to already existing conventional faucets, without the need of carrying out any important modifications.

The invention as disclosed is susceptible to many modifications and variations all of which will come within the spirit and scope of the invention.

Moreover, all of the details may be replaced by other tecnically equivalent elements.

In practicing the invention, the used materials, provided that they are compatible to the intended use, as well as the contingent size and shapes, can be any according to the needs.

## Claims

1. A preset loading ceramics disc shutter for faucets in general, comprising a shutter body adapted to be introduced in a faucet and the like, and defining in its inside a cavity for housing a fixed ceramics disc and a movable ceramics disc, characterized in that it further comprises an abutment edge at the bottom end of said cavity, with the top surface of said abutment edge a preloading gasket engaging which acts against the fixed ceramics disc, and with the bottom surface of said abutment edge a tightness gasket engaging which acts on the seat formed in the faucet.

2. A ceramics disc shutter, according to the preceding claim, characterized in that the movable ceramics disc is coupled to a stem rotatably supported in a tight way inside a small block associated with the top end of the cavity, said stem being provided, on the portion thereof projecting from said small block, with a polygonal portion, adapted to engage with a washer having a radially extending lug engaging in a cut-off defined by a top edge of said body.

3. A ceramics disc shutter, according to the preceding claims, characterized in that said cut-off defined by the edge of said body has an angular extension substantially equal to the rotation angle necessary for passing from the opening condition to the closing condition and/or vice-versa of the fixed and movable ceramics discs.

4. A ceramics disc shutter, according to one or more of the preceeding claims, characterized in that it comprises a resilient ring, acting between said stem and washer for axially locking said stem with respect to said body, with a constant resilient preloading of the preloading gasket, adapted to provide a resilient thrust between the fixed ceramics disc and the movable ceramics disc.

5. A ceramics disc shutter, according to one or more of the preceding claims, characterized in that the clamping force exerted on the tightness gasket, acting on the seat defined by the faucet, does not affect the clamping action between the fixed ceramics disc and the movable ceramics disc.

*Fig.1*

*Fig.2*

EP 0 343 312 A2

Fig.3

Fig.4

Fig.5